# EUROPEAN PATENT APPLICATION

(11) **EP 4 273 534 A1**
(43) Date of publication of application: **08.11.2023**
(21) Application number: 22204375.4
(22) Date of filing: 28.10.2022
(51) Int. Cl.: G01N 21/01, G01N 35/00, G01N 21/75, G01N 21/84

(54) **OPTICAL DETECTION DEVICE**

(30) Priority: 05.05.2022 TW 111117048
(71) Applicant: Wistron Corporation, New Taipei City 22181 (TW)
(72) Inventor: CHEN, Yi-Hui, 22181 New Taipei City (TW); WANG, Chen-Fa, 22181 New Taipei City (TW)
(74) Representative: Viering, Jentschura & Partner mbB Patent- und Rechtsanwälte

(57) **Abstract**

An optical detection device (100) includes a base (11), a cartridge placing portion (12), a shield cover (13), a processor (2), and an optical sensor (3). The base (11) includes an opening (111). The cartridge placing portion (12) is located in the base (11), and is in communication with the opening (111). The shield cover (13) is configured to open or close the opening (111). When the optical sensor (3) is actuated, the shield cover (13) closes the opening (111) to prevent external ambient light from entering the opening (111) to affect the optical sensor (3) during sensing.

## Description

### BACKGROUND

### Technical Field

The present invention relates to a detection device, and particularly, to a detection device using optical sensing.

### Related Art

According to the existing reagent detection method, after a subject's specimen is dropped into a test cartridge, the test cartridge is placed into a detection device, and the detection device interprets a detection result. According to the current detection device, an environment in which the test cartridge is placed into the detection device is an open space, the specimen in the test cartridge may volatilize, which is not conducive to the interpretation of the detection device. Consequently, misinterpretation of the detection device may be caused, and a risk that an operator is exposed to a virus-containing environment is increased.

In addition, the existing detection device uses an optical sensing method to interpret the detection result of the cartridge. As mentioned above, a region where the detection device reads the test cartridge is an open space, which may be affected by an ambient light source. Consequently, the detection device is interfered during optical sensing, to generate an abnormal image, and a possibility that the detection device misinterprets the detection result is increased.

### SUMMARY

The present disclosure provides an optical detection device. According to an embodiment, the optical detection device includes a base, a cartridge placing portion, a shield cover, an optical sensor, and a processor. The base includes an opening. The cartridge placing portion is located in the base, and is in communication with the opening. The shield cover is configured to open or close the opening. The optical sensor is connected to the processor, and the optical sensor includes a light receiving element. The light receiving element is configured to convert a received light into an image signal.

According to some embodiments, the processor outputs detection information according to the image signal.

According to some embodiments, the optical detection device further includes an actuator connected to the shield cover, where the processor is configured to control the actuator to be actuated, to drive the shield cover to open or close the opening.

According to some embodiments, the optical detection device further includes a positioning detector, where the positioning detector sends a positioning signal when being actuated, the processor transmits a closing signal to the actuator in response to the positioning signal, and the actuator drives the shield cover to close the opening according to the closing signal.

According to some embodiments, the optical detection device further includes a proximity sensor, where the proximity sensor sends a sensing signal when being actuated, and the processor transmits an opening signal to the actuator in response to the sensing signal.

According to some embodiments, the optical detection device further includes a bearing platform, where the cartridge placing portion is located on the bearing platform, and the bearing platform includes a first docking structure; and the shield cover includes a body and a second docking structure, where the second docking structure is connected to the body, and is configured to be docked with the first docking structure.

According to some embodiments, the optical detection device further includes a docking sensor, where the docking sensor is located on the first docking structure or the second docking structure, and the docking sensor sends a docking signal to the processor when the first docking structure is docked with the second docking structure.

According to some embodiments, the optical sensor further includes a light emitting element, and the processor further actuates the light emitting element to emit light toward the cartridge placing portion in response to the docking signal.

According to some embodiments, the optical detection device further includes a light quantity sensor, configured to sense a light quantity in the cartridge placing portion, and to output a light quantity signal to the processor, and the processor determines, according to the light quantity signal, whether to actuate the light emitting element to emit light toward the cartridge placing portion.

According to some embodiments, the light receiving element further senses a light quantity in the cartridge placing portion before the light emitting element is actuated, and outputs a light quantity signal to the processor, and the processor determines, according to the light quantity signal, whether to actuate the light emitting element to emit light toward the cartridge placing portion.

According to the optical detection device of an embodiment of the present disclosure, the shield cover closes the opening to effectively prevent external ambient light from entering the cartridge placing portion and to reduce a risk of virus spreading, so as to protect medical staff and avoid errors in optical sensing interpretation. According to some embodiments, a docking sensor is arranged in the optical detection device, and if the shield cover does not completely close the opening when the medical staff operate the optical detection device, the light emitting element is not actuated, so as to avoid performing optical sensing under a risk that an external light source enters the opening, which increases a risk that the image signal is misinterpreted.

### BRIEF DESCRIPTION OF THE DRAWINGS

FIG. 1 is a schematic diagram of usage of an optical detection device according to an embodiment of the present disclosure.
FIG. 2 is a schematic diagram of usage of an optical detection device according to an embodiment of the present disclosure.
FIG. 3 is a schematic structural diagram of a processor and an optical sensor according to an embodiment of the present disclosure.
FIG. 4 is a schematic diagram of a relationship between a shield cover and an opening according to an embodiment of the present disclosure.
FIG. 5 is a schematic diagram of a relationship between a shield cover and an opening according to an embodiment of the present disclosure.
FIG. 6 is a schematic diagram of a relationship between a shield cover and a base according to an embodiment of the present disclosure.
FIG. 7 is a schematic diagram of a relationship between a shield cover and a base according to an embodiment of the present disclosure.
FIG. 8 is a schematic structural diagram of a bearing platform of an optical detection device according to an embodiment of the present disclosure.
FIG. 9 is a schematic structural diagram of a bearing platform of an optical detection device according to an embodiment of the present disclosure.
FIG. 10 is a schematic diagram of usage of an optical detection device according to an embodiment of the present disclosure.
FIG. 11 is a schematic diagram of usage of an optical detection device according to an embodiment of the present disclosure.
FIG. 12 is a schematic diagram of a relationship between a processor and an actuator according to an embodiment of the present disclosure.
FIG. 13 is a schematic diagram of usage of an optical detection device according to an embodiment of the present disclosure.
FIG. 14 is a schematic diagram of usage of an optical detection device according to an embodiment of the present disclosure.
FIG. 15 is a schematic diagram of a relationship between a processor and a positioning detector according to an embodiment of the present disclosure.
FIG. 16 is a schematic diagram of usage of an optical detection device according to an embodiment of the present disclosure.
FIG. 17 is a schematic diagram of usage of an optical detection device according to an embodiment of the present disclosure.
FIG. 18 is a schematic diagram of a relationship between a processor and a proximity sensor according to an embodiment of the present disclosure.
FIG. 19 is a schematic diagram of usage of an optical detection device according to an embodiment of the present disclosure.
FIG. 20 is a schematic diagram of usage of an optical detection device according to an embodiment of the present disclosure.
FIG. 21 is a schematic diagram of a relationship between a processor and a docking sensor according to an embodiment of the present disclosure.
FIG. 22 is a schematic diagram of usage of an optical detection device according to an embodiment of the present disclosure.
FIG. 23 is a schematic diagram of usage of an optical detection device according to an embodiment of the present disclosure.
FIG. 24 is a schematic diagram of a relationship between a processor and a light quantity sensor according to an embodiment of the present disclosure.
FIG. 25 is a schematic diagram of usage of an optical detection device according to an embodiment of the present disclosure.
FIG. 26 is a schematic diagram of usage of an optical detection device according to an embodiment of the present disclosure.
FIG. 27 is a schematic diagram of a relationship between a processor and a display module according to an embodiment of the present disclosure.

### DETAILED DESCRIPTION

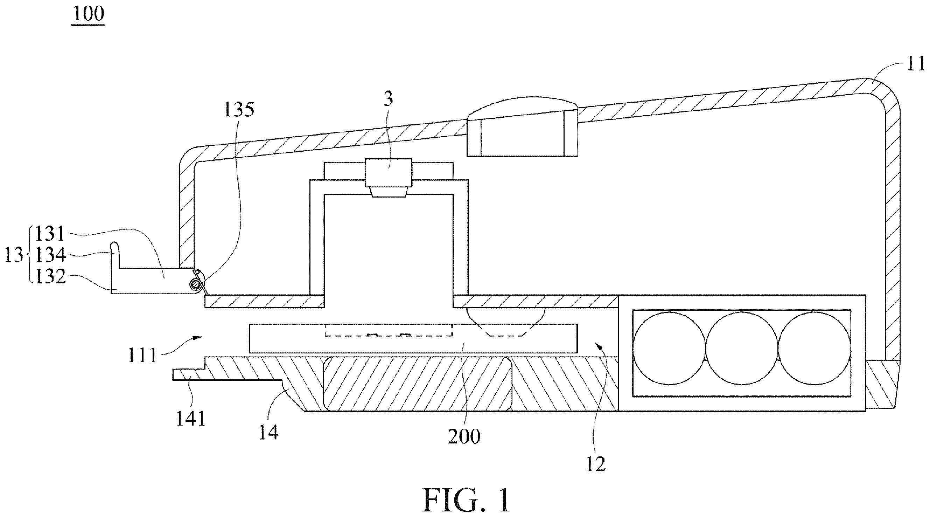

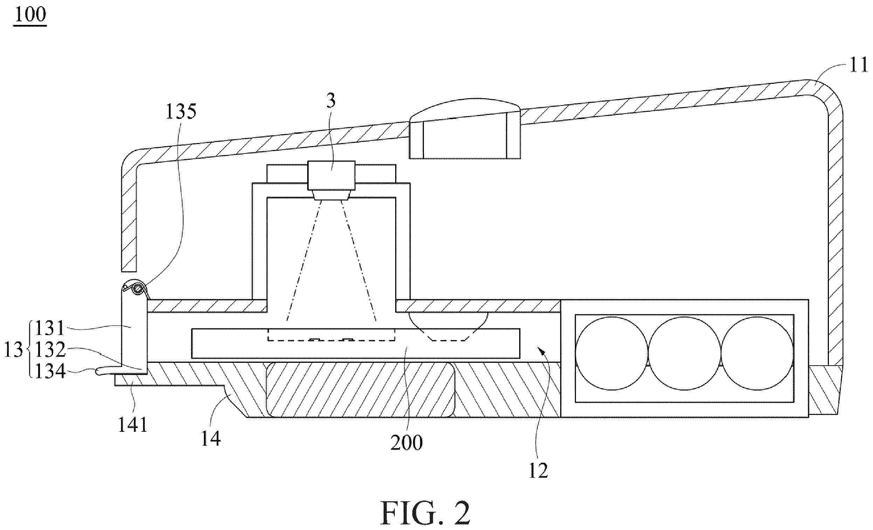

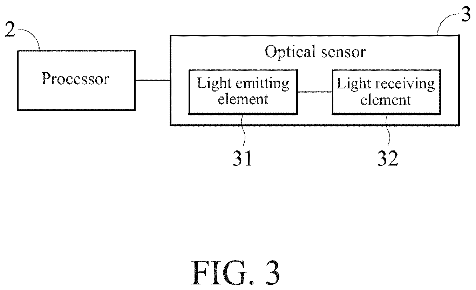

Referring to FIG. 1 to FIG. 3, FIG. 1 and FIG. 2 respectively are schematic diagrams of usage of an optical detection device 100 according to an embodiment of the present disclosure. FIG. 3 is a schematic structural diagram of a processor 2 and an optical sensor 3 according to an embodiment of the present disclosure. The optical detection device 100 includes a base 11, a cartridge placing portion 12, a shield cover 13, and an optical sensor 3. The base 11 includes an opening 111. The cartridge placing portion 12 is located in the base 11, and is in communication with the opening 111. The shield cover 13 is configured to open or close the opening 111. According to some embodiments, the shield cover 13 may be configured to open and close the opening 111 manually, as the embodiments shown in FIG. 1 and FIG. 2. According to some embodiments, the shield cover 13 is of an automated design, and may automatically open and close the opening 111 (see below for details). According to some embodiments, an end of the shield cover 13 is pivotally connected to the base 11. According to the embodiments shown in FIG. 1 and FIG. 2, the shield cover 13 is pivotally connected to the base 11 by a torsion spring 135.

According to the embodiments shown in FIG. 1 and FIG. 2, the optical detection device 100 further includes a bearing platform 14, where the cartridge placing portion 12 is located on the bearing platform 14, and the bearing platform 14 includes a first docking structure 141. The shield cover 13 includes a body 131 and a second docking structure 132. The second docking structure 132 is connected to the body 131, and is configured to be docked with the first docking structure 141. After the first docking structure 141 and the second docking structure 132 are docked with each other, the shield cover 13 closes the opening 111. As shown in FIG. 1, the first docking structure 141 is a groove, and the second docking structure 132 is a structure corresponding to the groove. The docking is in a state of matching or tight fitting, which is not limited in the present disclosure. According to the embodiments shown in FIG. 1 and FIG. 2, the second docking structure 132 includes a toggle portion 134, and the toggle portion 134 protrudes from the body 131, for the operator to toggle and grip to use, to control the shield cover 13 to open or close opening 111.

The optical sensor 3 includes a light receiving element 32. The light receiving element 32 is configured to convert a received light into an image signal. According to the embodiment shown in FIG. 3, the optical sensor 3 further includes a light emitting element 31. When the light emitting element 31 is actuated, the light emitting element 31 emits light toward the cartridge placing portion 12. The light receiving element 32 may convert a received light into an image signal. According to some embodiments, the light receiving element 32 continuously receives light in the cartridge placing portion 12 after being powered on. According to some other embodiments, the light receiving element 32 starts to receive the light in the cartridge placing portion 12 when being driven. As shown in FIG. 1 and FIG. 2, the operator places a test cartridge 200 into the cartridge placing portion 12. The light emitting element 31 emits light toward the cartridge placing portion (that is, emits light toward the test cartridge 200) when being actuated. The light received by the light receiving element 32 is light fed back from the test cartridge 200. According to the embodiment shown in FIG. 3, the optical detection device 100 further includes a processor 2, the processor 2 is connected to the optical sensor 3, and the processor 2 is configured to actuate the light emitting element 31 in response to a driving signal, causing the light emitting element 31 to emit light toward the cartridge placing portion 12. The driving signal may be automatically outputted by the processor 2 (see below for details) or be manually outputted to the processor 2. According to some embodiments, after the light receiving element 32 converts the received light into an image signal, the processor 2 outputs detection information according to the image signal.

According to some embodiments, the optical detection device 100 is a biological specimen detection device. A specimen taken out from a subject is dropped into the test cartridge 200. Then the test cartridge 200 is placed into the cartridge placing portion 12 for optical sensing, to obtain detection information. The detection information includes "Positive", "Negative" or "Invalid".

According to some embodiments, in order to prevent external ambient light from being incident on the opening 111, a light quantity in the cartridge placing portion 12 is not suitable for the light emitting element 31 to emit light, for a subsequent optical sensing step. The light receiving element 32 further senses a light quantity in the cartridge placing portion 12 before the light emitting element 31 is actuated, and outputs a light quantity signal to the processor 2, and the processor 2 determines, according to the light quantity signal, whether to actuate the light emitting element 31 to emit light toward the cartridge placing portion 12. In other words, whether a light quantity value of the light quantity signal exceeds a preset light quantity value is compared by the processor 2. When the light quantity value of the light quantity signal is lower than the preset light quantity value, it means that the cartridge placing portion 12 is suitable for optical sensing, the processor 2 actuates the light emitting element 31 to emit light, and not vice versa.

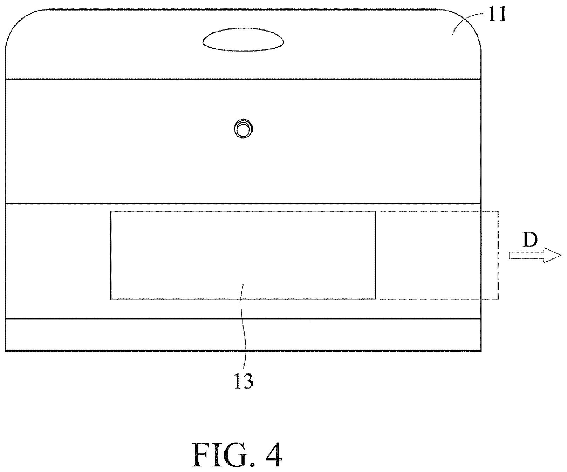

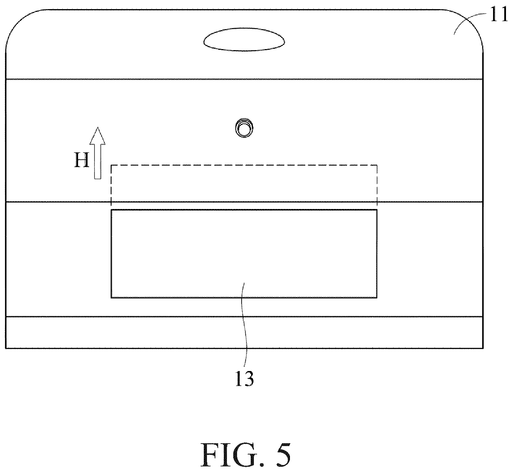

FIG. 4 and FIG. 5 respectively are schematic diagrams of a relationship between a shield cover 13 and an opening 111 according to an embodiment of the present disclosure. Different from the embodiments shown in FIG. 1 and FIG. 2, the shield cover 13 shown in FIG. 4 and FIG. 5 is opened or closed in a translational manner. The shield cover 13 shown in FIG. 4 moves in a horizontal direction D to open or close the opening 111, and the shield cover 13 shown in FIG. 5 moves in a vertical direction H to open or close the opening 111.

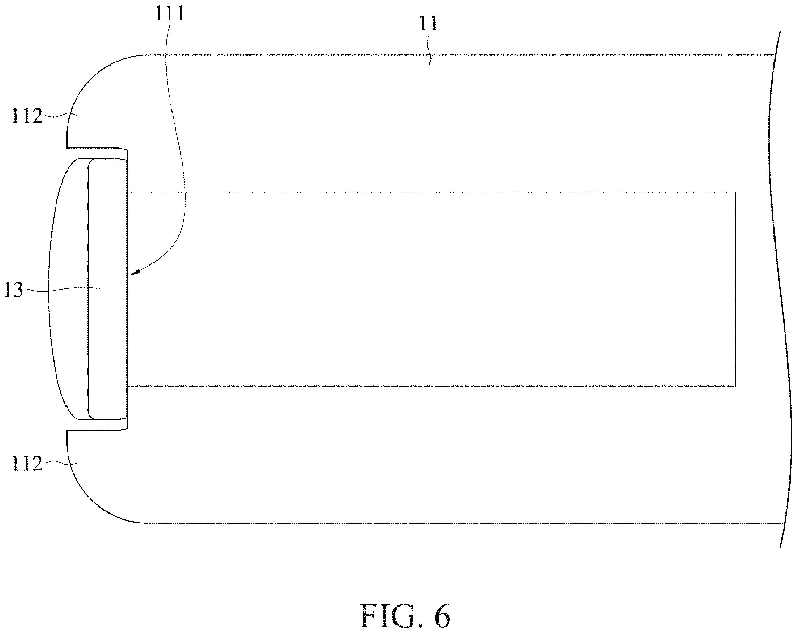

FIG. 6 is a schematic diagram of a relationship between a shield cover 13 and a base 11 according to an embodiment of the present disclosure. According to the embodiment shown in FIG. 6, a size of the shield cover 13 is larger than that of the opening 111. In addition, the base 11 includes two protruding ribs 112, which are respectively located on two sides of the shield cover 13. With this structure, when the shield cover 13 closes the opening 111, external ambient light can be effectively prevented from entering the opening 111, thereby improving the sensing efficiency and detection accuracy of the optical sensor 3.

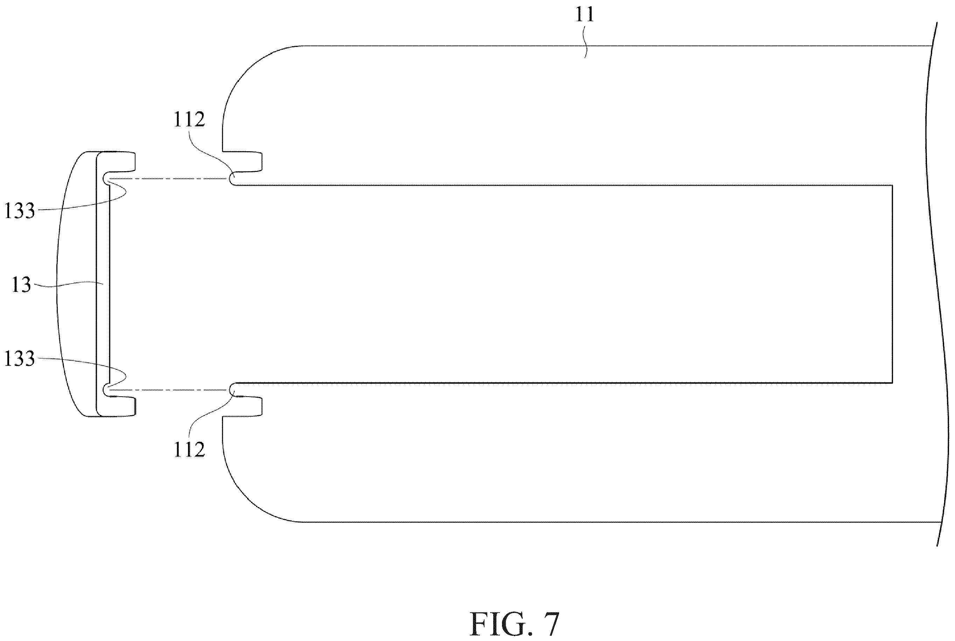

FIG. 7 is a schematic diagram of a relationship between a shield cover 13 and a base 11 according to an embodiment of the present disclosure. According to the embodiment shown in FIG. 7, the size of the shield cover 13 is larger than that of the opening 111, the base 11 includes two protruding ribs 112, the shield cover 13 includes two sliding grooves 133, and the two protruding ribs 112 are respectively detachably located in the two sliding grooves 133. With this structure, when the shield cover 13 closes the opening 111, external ambient light can also be effectively prevented from entering the opening 111, thereby improving the sensing efficiency and detection accuracy of the optical sensor 3.

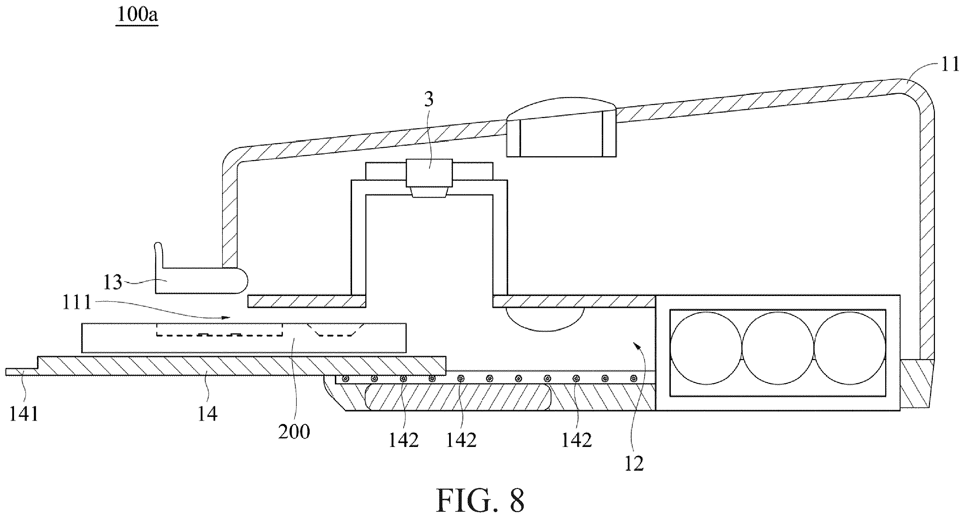

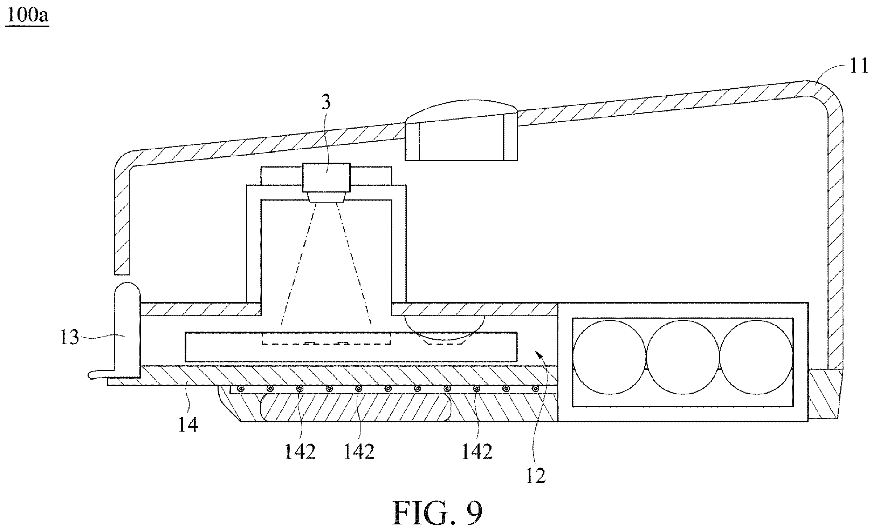

FIG. 8 and FIG. 9 respectively are schematic structural diagrams of a bearing platform 14 of an optical detection device 100a according to an embodiment of the present disclosure. According to the embodiments shown in FIG. 8 and FIG. 9, a bottom of the bearing platform 14 includes a sliding portion 142, and the sliding portion 142 may be a sliding groove, a sliding rail or a roller, causing the bearing platform 14 to move relative to the opening 111 (the base 11), that is, the bearing platform 14 may move toward the operator, which is convenient for the operator to place the test cartridge 200 on the bearing platform 14, and then move away from the operator to return to an original position, as shown in FIG. 9. The bearing platform 14 may be moved manually, for example, the bearing platform 14 may be returned to the base 11 by means of pulling and pushing back. The bearing platform 14 may also be set to move automatically, which is not limited in the present disclosure.

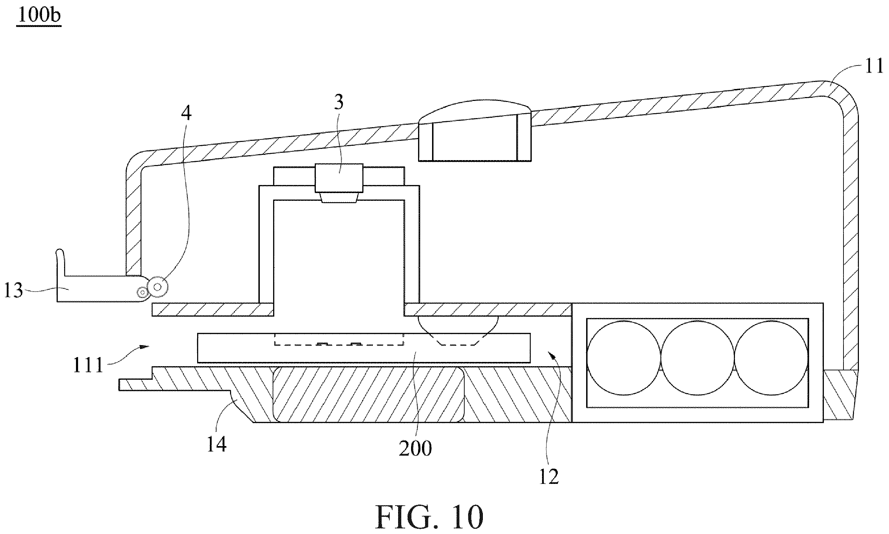

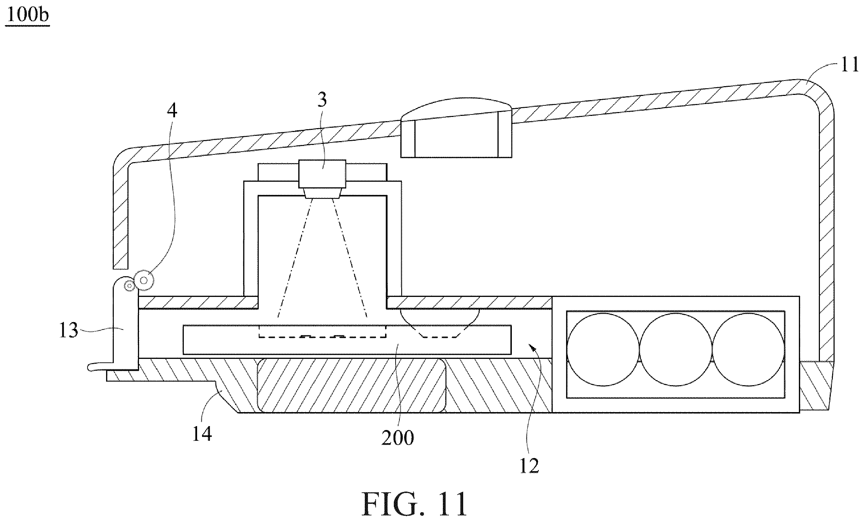

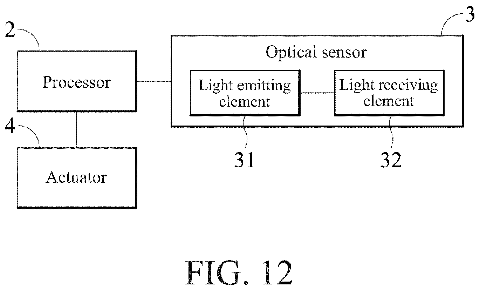

Referring to FIG. 10 to FIG. 12, FIG. 10 and FIG. 11 respectively are schematic diagrams of usage of an optical detection device 100b according to an embodiment of the present disclosure. FIG. 12 is a schematic diagram of a relationship between a processor 2 and an actuator 4 according to an embodiment of the present disclosure. According to the embodiments shown in FIG. 10 and FIG. 11, the optical detection device 100 further includes an actuator 4 connected to the shield cover 13, and the processor 2 is further configured to control the actuator 4 to be actuated, to drive the shield cover 13 to open or close the opening 111, so as to automatically open or close the opening 111. According to some embodiments, the actuator 4 is a stepper motor.

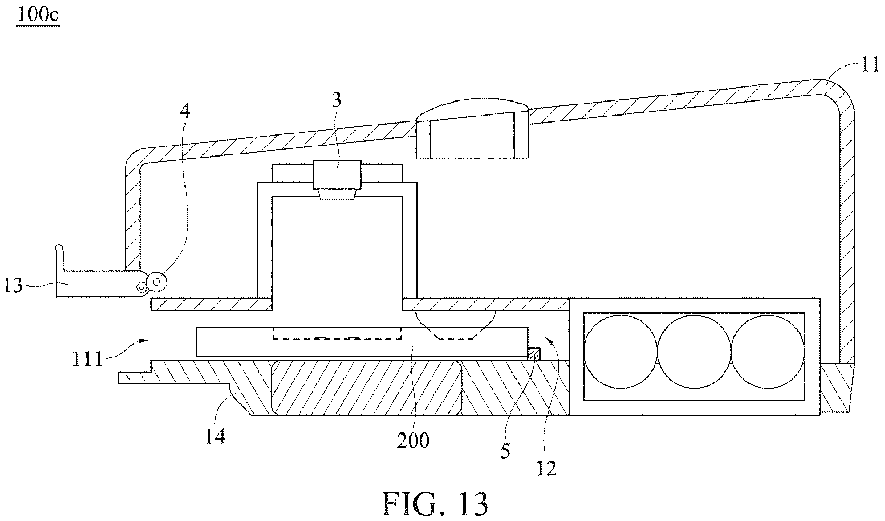

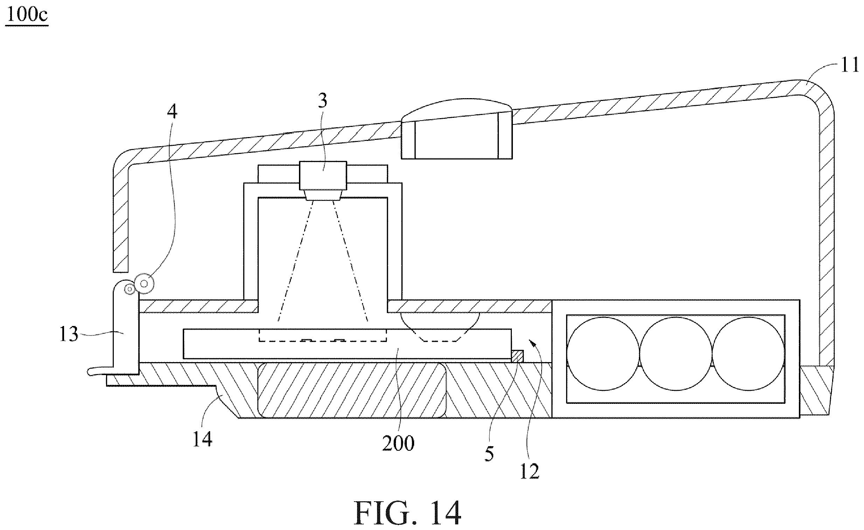

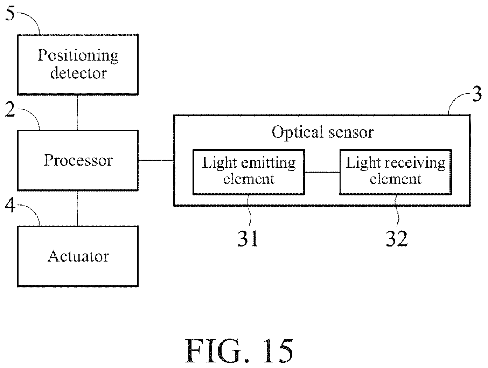

Referring to FIG. 13 to FIG. 15, FIG. 13 and FIG. 14 respectively are schematic diagrams of usage of an optical detection device 100c according to an embodiment of the present disclosure. FIG. 15 is a schematic diagram of a relationship between a processor 2 and a positioning detector 5 according to an embodiment of the present disclosure. According to these embodiments, the optical detection device 100 further includes a positioning detector 5, where the positioning detector 5 sends a positioning signal when being actuated, the processor 2 transmits a closing signal to the actuator 4 in response to the positioning signal, and the actuator 4 drives the shield cover 13 to close the opening 111 according to the closing signal. The positioning detector 5 detects whether the test cartridge 200 is located at a fixed position of the cartridge placing portion 12, and sends a positioning signal when detecting that the test cartridge 200 is located at the fixed position, and the processor 2 further controls the actuator 4 to drive the shield cover 13 to close the opening 111 in response to the positioning signal. The positioning detector 5, when being actuated, may continuously detect whether the test cartridge is positioned at the fixed position when being powered on. Alternatively, the positioning detector 5, when being driven, may detect whether the test cartridge is positioned at the fixed position, which is not limited in the present disclosure.

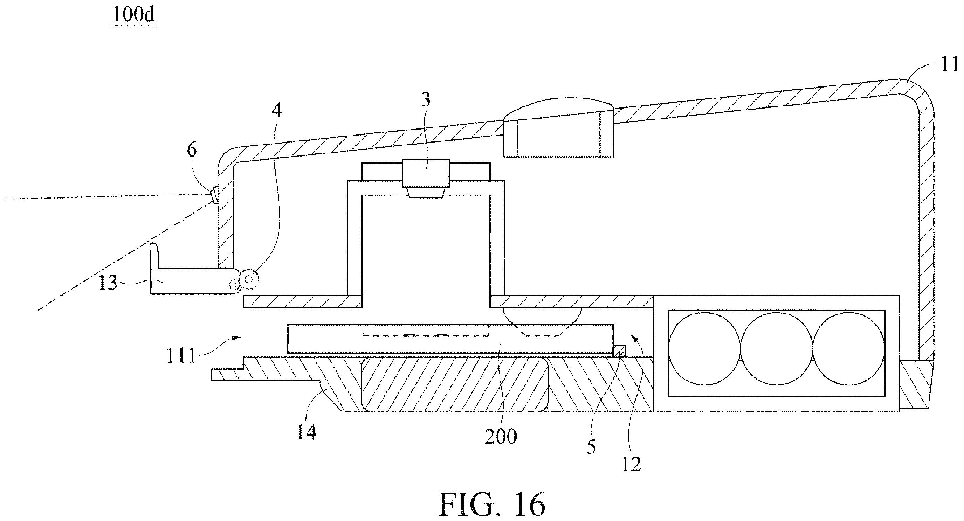

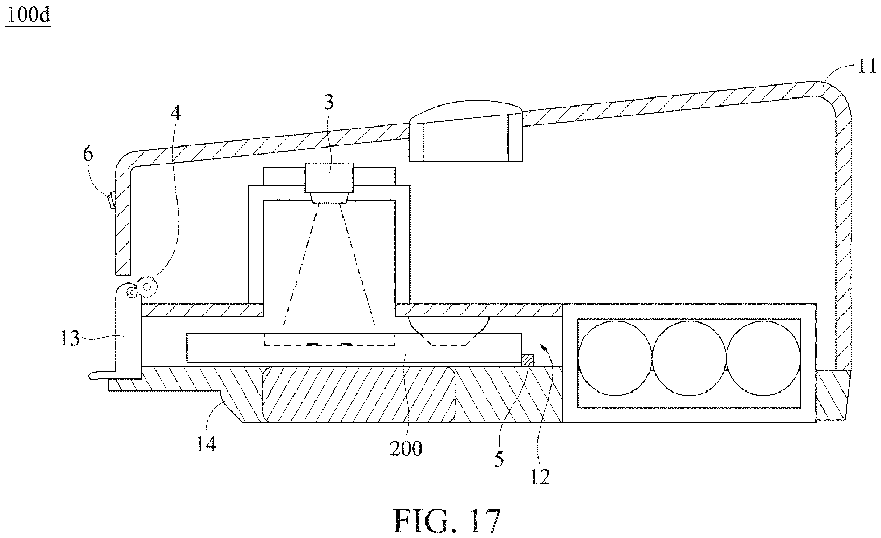

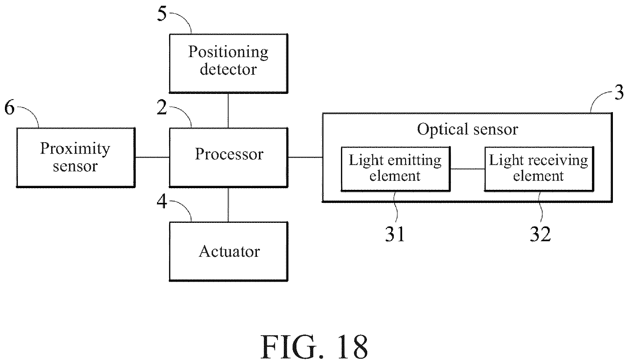

Referring to FIG. 16 to FIG. 18, FIG. 16 and FIG. 17 respectively are schematic diagrams of usage of an optical detection device 100d according to an embodiment of the present disclosure. FIG. 18 is a schematic diagram of a relationship between a processor 2 and a proximity sensor 6 according to an embodiment of the present disclosure. According to these embodiments, the optical detection device 100d further includes a proximity sensor 6. When the operator approaches the optical detection device 100d, the proximity sensor 6 detects the operator (the proximity sensor 6 is actuated), and sends a sensing signal, and the processor 2 transmits an opening signal to the actuator 4 in response to the sensing signal. According to the opening signal, the actuator 4 does not drive the shield cover 13 to close the opening 111, or the actuator 4 drives the shield cover 13 to open the opening 111. In other words, at this time, the opening 111 is in an open state, which is convenient for the operator to place the test cartridge 200 into the cartridge placing portion 12. However, in some embodiments, the shield cover 13 originally closes the opening 111. When the operator approaches the optical detection device 100d, the proximity sensor 6 is actuated to send a sensing signal, the processor 2 transmits an opening signal to the actuator 4 in response to the sensing signal, and the actuator 4 drives the shield cover 13 to open the opening 111 according to the opening signal.

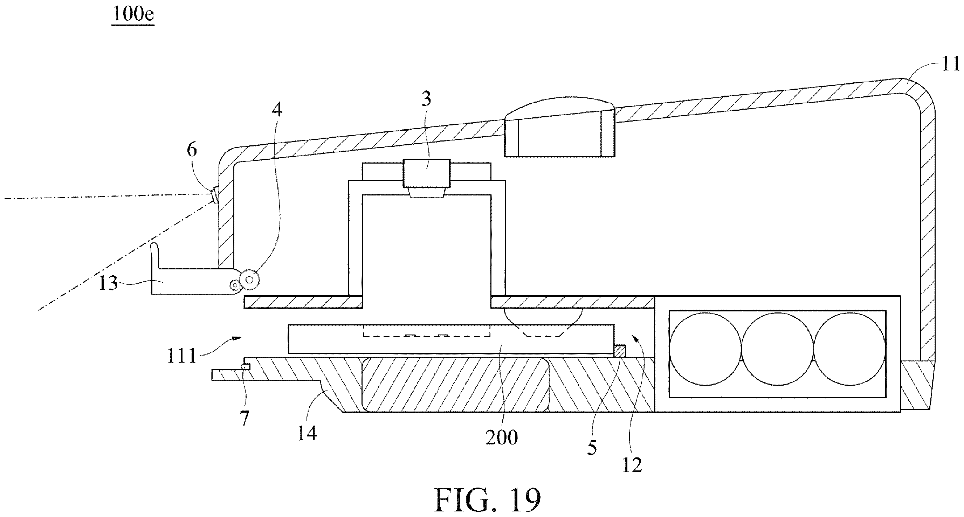

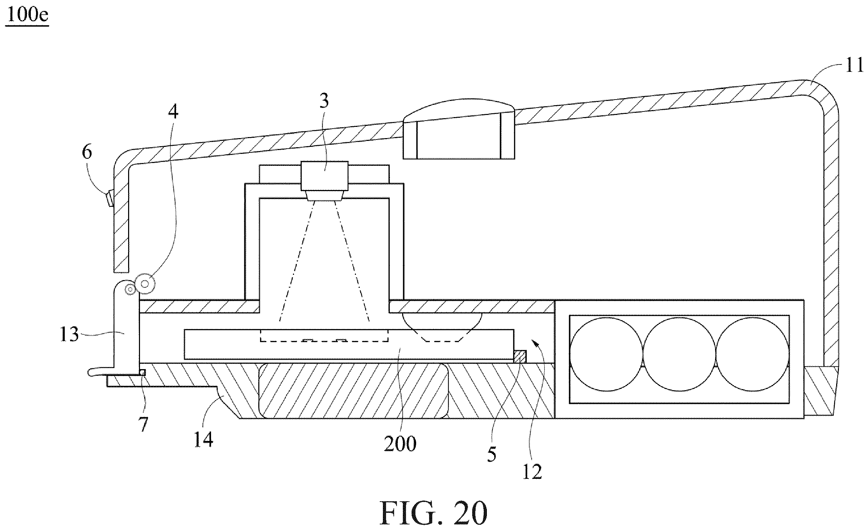

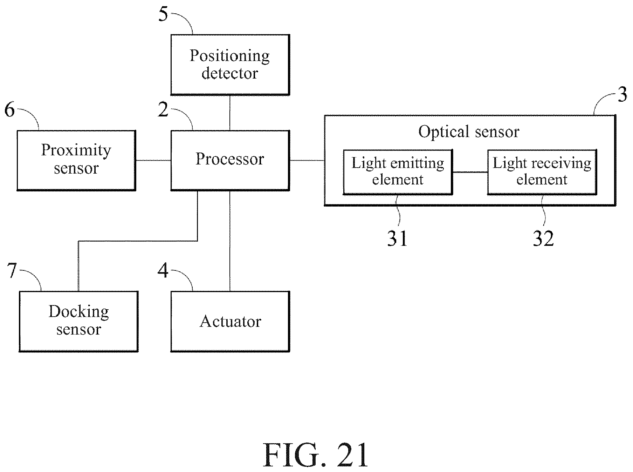

Referring to FIG. 19 to FIG. 21, FIG. 19 and FIG. 20 respectively are schematic diagrams of usage of an optical detection device 100e according to an embodiment of the present disclosure. FIG. 21 is a schematic diagram of a relationship between a processor 2 and a docking sensor 7 according to an embodiment of the present disclosure. According to these embodiments, the optical detection device 100e further includes a docking sensor 7. The docking sensor 7 may be located on the first docking structure 141 or the second docking structure 132. According to the embodiment shown in FIG. 19, the docking sensor 7 is located on the first docking structure 141. When the first docking structure 141 and the second docking structure 132 are docked with each other, the docking sensor 7 sends a docking signal to the processor 2. According to some embodiments, the processor 2 outputs a tight closing signal in response to the docking signal, indicating that the shield cover 13 has closed the opening 111 at this time. The tight closing signal may be expressed by means of sound, light, or the like, to inform the operator that the shield cover 13 has closed the opening 111, and a next optical detection step may be performed. According to some embodiments, the docking sensor 7 is a pressure sensing detector. When the second docking structure 132 is docked with the first docking structure 141, the docking sensor 7 senses pressure from the second docking structure 132, and sends a docking signal. According to some other embodiments, the processor 2 further actively actuates the light emitting element 31 to emit light in response to the docking signal, and performs an optical sensing step.

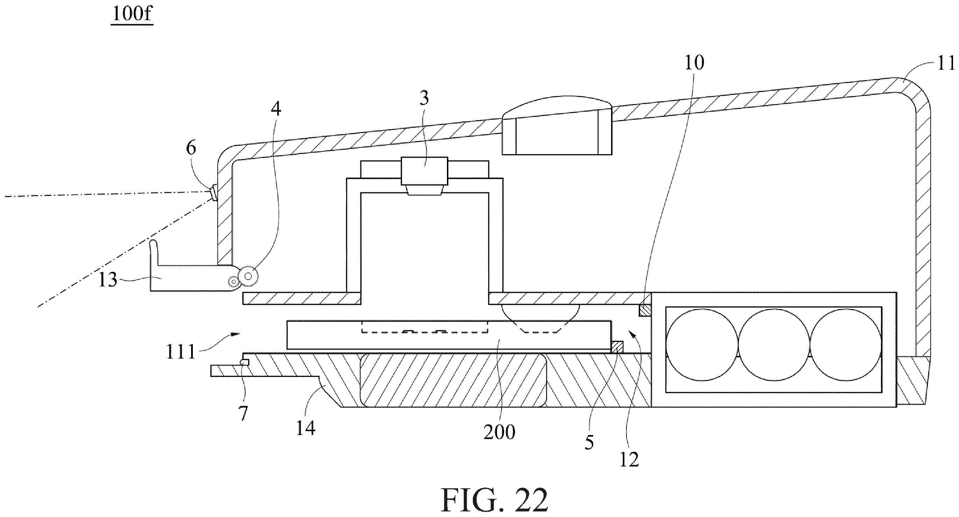

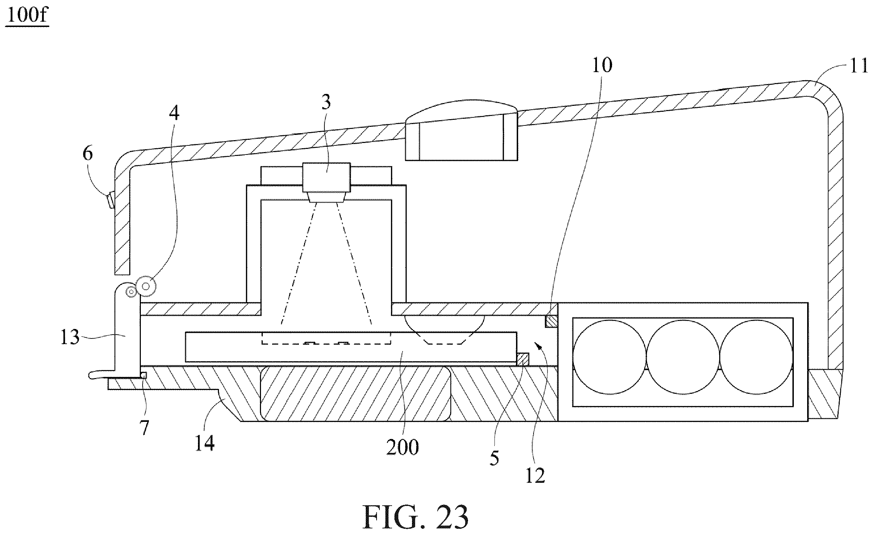

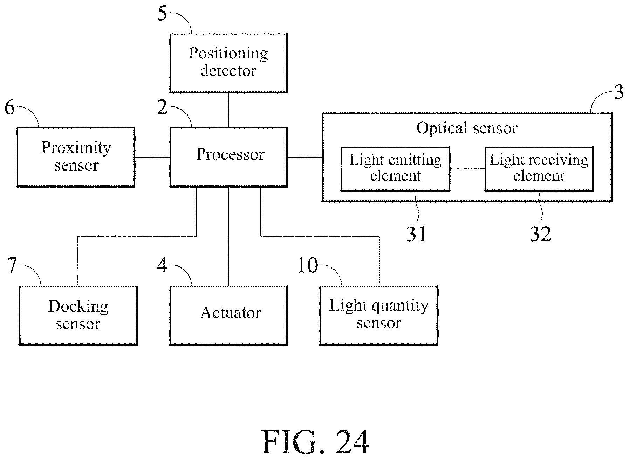

Referring to FIG. 22 to FIG. 24, FIG. 22 and FIG. 23 respectively are schematic diagrams of usage of an optical detection device 100f according to an embodiment of the present disclosure. FIG. 24 is a schematic diagram of a relationship between a processor 2 and a light quantity sensor 10 according to an embodiment of the present disclosure. According to these embodiments, the optical detection device 100f further includes a light quantity sensor 10, configured to sense a light quantity in the cartridge placing portion 12, and to output a light quantity signal to the processor 2, and the processor 2 determines, according to the light quantity signal, whether to actuate the light emitting element 31 to emit light toward the cartridge placing portion 12. If external ambient light is incident on the opening 111, the light quantity in the cartridge placing portion 12 is not suitable for optical sensing. Therefore, the light quantity sensor 10 senses the light quantity in the cartridge placing portion 12, and outputs a light quantity signal to the processor 2. The processor 2 interprets whether the light quantity in the cartridge placing portion 12 is suitable for optical sensing at this time, and further determines whether to actuate the light emitting element 31 to emit light.

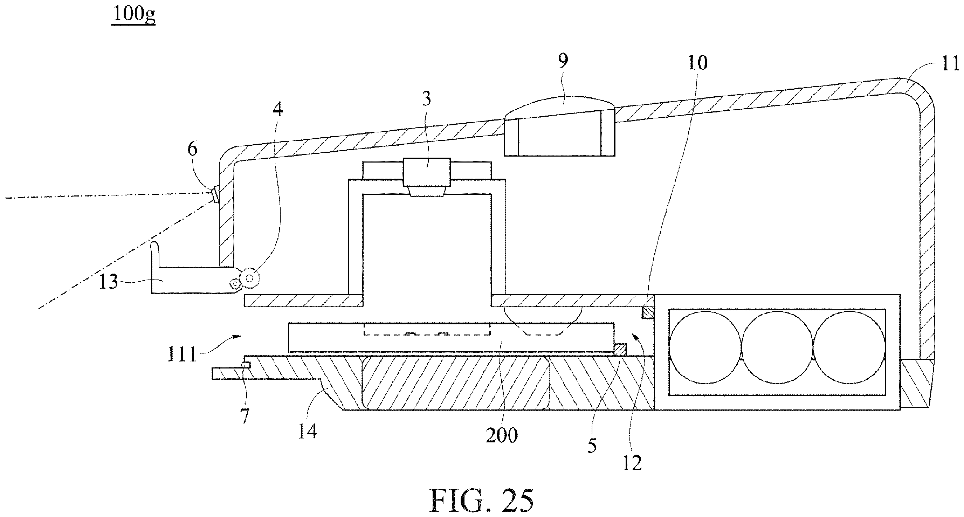

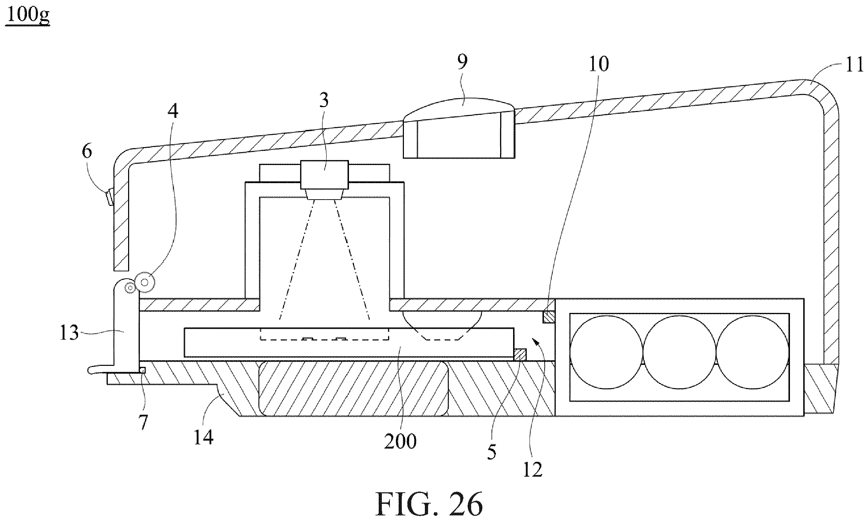

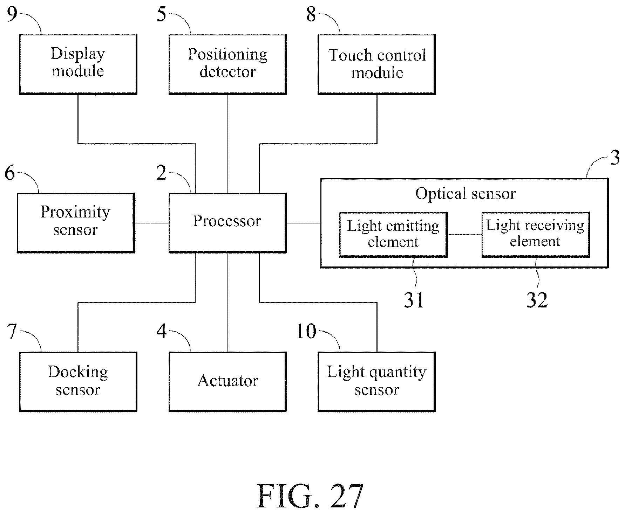

Referring to FIG. 25 to FIG. 27, FIG. 25 and FIG. 26 respectively are schematic diagrams of usage of an optical detection device 100g according to an embodiment of the present disclosure. FIG. 27 is a schematic diagram of a relationship between a processor 2 and a display module 9 according to an embodiment of the present disclosure. The optical detection device 100g further includes the display module 9. The display module 9 may display detection information for the operator to watch. According to the embodiment shown in FIG. 25, when the operator approaches the optical detection device 100, the proximity sensor 6 is actuated, the shield cover 13 does not close the opening 111 (or turns from closing the opening 111 to opening the opening 111), and the opening 111 is in an open state. The operator places the test cartridge 200 into the cartridge placing portion 12. When the test cartridge 200 is located at a fixed position of the cartridge placing portion 12, the positioning detector 5 is actuated, and the actuator 4 drives the shield cover 13 to close the opening 111. When the first docking structure 141 and the second docking structure 132 of the shield cover 13 are docked with each other, the docking sensor 7 is actuated to send a docking signal. The processor 2 actuates the light emitting element 31 to emit light in response to the docking signal, and performs an optical sensing step. The light receiving element 32 receives the light and converts the received light into an image signal. The processor 2 outputs detection information according to the image signal. Then the display module 9 displays the detection information, to complete the optical detection reading.

According to the embodiment shown in FIG. 27, the optical detection device 100g further includes a touch control module 8 connected to the processor 2, and the touch control module 8 receives an operation command from the operator to output a driving signal. The touch control module 8 may be a keyboard group or a touch control screen. According to some embodiments, the display module 9 and the touch control module 8 are integrated with each other, to provide operation and viewing functions for the operator.

According to some embodiments, the shield cover of the optical detection device effectively closes the opening, to block external light from entering the opening, thereby preventing the cartridge placing portion from being interfered by the external light during optical sensing, and reducing a risk that the processor misinterprets the image signal. According to some embodiments, when medical staff operate the optical detection device, because the shield cover completely closes the opening, virus of the specimen in the test cartridge can be prevented from escaping, thereby protecting safety of the operator. According to some embodiments, a docking sensor is arranged in the optical detection device. If the shield cover does not completely close the opening, the light emitting element is not actuated, so as to avoid performing optical sensing under a risk that an external light source enters the opening, affecting the processor interpreting the image signal, and causing misinterpretation.

## Claims

1. An optical detection device (100), comprising:
a base (11), comprising an opening (111);
a cartridge placing portion (12), located in the base (11), and in communication with the opening (111);
a shield cover (13), configured to open or close the opening (111);
a processor (2); and
an optical sensor (3), connected to the processor (2), wherein the optical sensor (3) is configured to convert a received light into an image signal.

2. The optical detection device (100) according to claim 1, further comprising an actuator (4) connected to the shield cover (13), wherein the processor (2) is configured to control the actuator (4) to be actuated, to drive the shield cover (13) to open or close the opening (111).

3. The optical detection device (100) according to claim 2, further comprising a positioning detector (5), wherein the positioning detector (5) is configured to send a positioning signal when being actuated, the processor (2) is configured to transmit a closing signal to the actuator (4) in response to the positioning signal, and the actuator (4) is configured to drive the shield cover (13) to close the opening (111) according to the closing signal.

4. The optical detection device (100) according to claim 2, further comprising a proximity sensor (6), wherein the proximity sensor (6) is configured to send a sensing signal when being actuated, and the processor (2) transmits an opening (111) signal to the actuator (4) in response to the sensing signal.

5. The optical detection device (100) according to claim 1, further comprising a bearing platform (14), wherein the cartridge placing portion (12) is located on the bearing platform (14), and the bearing platform (14) comprises a first docking structure (141); and the shield cover (13) comprises a body (131) and a second docking structure (132), wherein the second docking structure (132) is connected to the body (131), and is configured to be docked with the first docking structure (141).

6. The optical detection device (100) according to claim 5, further comprising a docking sensor (7), wherein the docking sensor (7) is located on the first docking structure (141) or the second docking structure (132), and the docking sensor (7) is configured to send a docking signal when the first docking structure (141) is docked with the second docking structure (132).

7. The optical detection device (100) according to claim 6, wherein the optical sensor (3) further comprises a light emitting element (31), and the processor (2) is configured to actuate the light emitting element (31) in response to the docking signal, to emit light toward the cartridge placing portion (12).

8. The optical detection device (100) according to claim 5, wherein the first docking structure (141) is a groove, and the second docking structure (132) comprises a toggle portion (134) protruding from the body (131).

9. The optical detection device (100) according to claim 5, wherein a bottom of the bearing platform (14) comprises a sliding portion (142), causing the bearing platform (14) to move relative to the opening (111).

10. The optical detection device (100) according to claim 1, further comprising a light quantity sensor (10), configured to sense a light quantity in the cartridge placing portion (12), and to output a light quantity signal to the processor (2); and the optical sensor (3) further comprising a light emitting element (31), wherein the processor (2) determines, according to the light quantity signal, whether to actuate the light emitting element (31) to emit light toward the cartridge placing portion (12).

11. The optical detection device (100) according to claim 1, wherein the optical sensor (3) comprises a light receiving element (32) and a light emitting element (31), the light receiving element (32) senses a light quantity of the cartridge placing portion (12) before the light emitting element (31) is actuated, and outputs a light quantity signal to the processor (2), and the processor (2) determines, according to the light quantity signal, whether to actuate the light emitting element (31) to emit light toward the cartridge placing portion (12).

12. The optical detection device (100) according to claim 1, further comprising a touch control module (8) connected to the processor (2); and the optical sensor (3) further comprising a light emitting element (31), wherein the touch control module (8) receives an operation command to output a driving signal, and the processor (2) actuates the light emitting element (31) in response to the driving signal, to emit light toward the cartridge placing portion (12).

13. The optical detection device (100) according to claim 1, further comprising a display module (9) connected to the processor (2), wherein the processor (2) outputs detection information according to the image signal, and the display module (9) displays the detection information.

14. The optical detection device (100) according to claim 1, wherein the optical sensor (3) further comprises a light emitting element (31); and
the optical detection device (100) further comprises:
a bearing platform (14), wherein the cartridge placing portion (12) is located on the bearing platform (14), and the bearing platform (14) comprises a first docking structure (141); and the shield cover (13) comprises a body (131) and a second docking structure (132), wherein the second docking structure (132) is connected to the body (131), and is configured to be docked with the first docking structure (141);
an actuator (4), connected to the shield cover (13), wherein the processor (2) is further configured to control the actuator (4) to be actuated, to drive the shield cover (13) to open or close the opening (111);
a proximity sensor (6), wherein the proximity sensor (6) sends a sensing signal when being actuated, and the processor (2) transmits an opening (111) signal to the actuator (4) in response to the sensing signal;
a positioning detector (5), wherein the positioning detector (5) sends a positioning signal when being actuated, the processor (2) transmits a closing signal to the actuator (4) in response to the positioning signal, and the actuator (4) drives the shield cover (13) to close the opening (111) according to the closing signal;
a docking sensor (7), wherein the docking sensor (7) is located on the first docking structure (141) or the second docking structure (132), the docking sensor (7) sends a docking signal to the processor (2) when the first docking structure (141) is docked with the second docking structure (132), and the processor (2) further actuates the light emitting element (31) in response to the docking signal, to emit light toward the cartridge placing portion (12); and
a display module (9), connected to the processor (2), wherein the processor (2) outputs detection information according to the image signal, and the display module (9) displays the detection information.

15. The optical detection device (100) according to claim 14, wherein
the first docking structure (141) is a groove; the second docking structure (132) comprises a toggle portion (134) protruding from the body (131); and
a size of the shield cover (13) is larger than that of the opening (111), and an end of the shield cover (13) is pivotally connected to the base (11) by a torsion spring (135); and the shield cover (13) comprises two sliding grooves (133), the base (11) comprises two protruding ribs (112), and the two protruding ribs (112) are respectively detachably located in the two sliding grooves (133).

## Amended claims

### Amended claims in accordance with Rule 137(2) EPC.

1. An optical detection device (100), comprising:
a base (11), comprising an opening (111);
a cartridge placing portion (12), located in the base (11), and in communication with the opening (111);
a bearing platform (14), wherein the cartridge placing portion (12) is located on the bearing platform (14), and the bearing platform (14) comprises a first docking structure (141);
a shield cover (13), configured to open or close the opening (111), wherein the shield cover (13) comprises a body (131) and a second docking structure (132), the second docking structure (132) is connected to the body (131), and the second docking structure (132) is configured to be docked with the first docking structure (141);
a processor (2);
an optical sensor (3), connected to the processor (2), wherein the optical sensor (3) is configured to convert a received light into an image signal; and
a docking sensor (7), located on the first docking structure (141) or the second docking structure (132), wherein the docking sensor (7) is configured to send a docking signal when the first docking structure (141) is docked with the second docking structure (132).

2. The optical detection device (100) according to claim 1, further comprising an actuator (4) connected to the shield cover (13), wherein the processor (2) is configured to control the actuator (4) to be actuated, to drive the shield cover (13) to open or close the opening (111).

3. The optical detection device (100) according to claim 2, further comprising a positioning detector (5), wherein the positioning detector (5) is configured to send a positioning signal when being actuated, the processor (2) is configured to transmit a closing signal to the actuator (4) in response to the positioning signal, and the actuator (4) is configured to drive the shield cover (13) to close the opening (111) according to the closing signal.

4. The optical detection device (100) according to claim 2, further comprising a proximity sensor (6), wherein the proximity sensor (6) is configured to send a sensing signal when being actuated, and the processor (2) transmits an opening signal to the actuator (4) in response to the sensing signal.

5. The optical detection device (100) according to claim 1, wherein the optical sensor (3) further comprises a light emitting element (31), and the processor (2) is configured to actuate the light emitting element (31) in response to the docking signal, to emit light toward the cartridge placing portion (12).

6. The optical detection device (100) according to claim 1, wherein the first docking structure (141) is a groove, and the second docking structure (132) comprises a toggle portion (134) protruding from the body (131).

7. The optical detection device (100) according to claim 1, wherein a bottom of the bearing platform (14) comprises a sliding portion (142), causing the bearing platform (14) to move relative to the opening (111).

8. The optical detection device (100) according to claim 1, further comprising a light quantity sensor (10), configured to sense a light quantity in the cartridge placing portion (12), and to output a light quantity signal to the processor (2); and the optical sensor (3) further comprising a light emitting element (31), wherein the processor (2) determines, according to the light quantity signal, whether to actuate the light emitting element (31) to emit light toward the cartridge placing portion (12).

9. The optical detection device (100) according to claim 1, wherein the optical sensor (3) comprises a light receiving element (32) and a light emitting element (31), the light receiving element (32) senses a light quantity of the cartridge placing portion (12) before the light emitting element (31) is actuated, and outputs a light quantity signal to the processor (2), and the processor (2) determines, according to the light quantity signal, whether to actuate the light emitting element (31) to emit light toward the cartridge placing portion (12).

10. The optical detection device (100) according to claim 1, further comprising a touch control module (8) connected to the processor (2); and the optical sensor (3) further comprising a light emitting element (31), wherein the touch control module (8) receives an operation command to output a driving signal, and the processor (2) actuates the light emitting element (31) in response to the driving signal, to emit light toward the cartridge placing portion (12).

11. The optical detection device (100) according to claim 1, further comprising a display module (9) connected to the processor (2), wherein the processor (2) outputs detection information according to the image signal, and the display module (9) displays the detection information.

12. The optical detection device (100) according to claim 1, wherein the optical sensor (3) further comprises a light emitting element (31); and
the optical detection device (100) further comprises:
an actuator (4), connected to the shield cover (13), wherein the processor (2) is further configured to control the actuator (4) to be actuated, to drive the shield cover (13) to open or close the opening (111);
a proximity sensor (6), wherein the proximity sensor (6) sends a sensing signal when being actuated, and the processor (2) transmits an opening signal to the actuator (4) in response to the sensing signal;
a positioning detector (5), wherein the positioning detector (5) sends a positioning signal when being actuated, the processor (2) transmits a closing signal to the actuator (4) in response to the positioning signal, and the actuator (4) drives the shield cover (13) to close the opening (111) according to the closing signal; and
a display module (9), connected to the processor (2), wherein the processor (2) outputs detection information according to the image signal, and the display module (9) displays the detection information;
wherein the docking sensor (7) sends a docking signal to the processor (2) when the first docking structure (141) is docked with the second docking structure (132), and the processor (2) further actuates the light emitting element (31) in response to the docking signal, to emit light toward the cartridge placing portion (12).

13. The optical detection device (100) according to claim 12, wherein
the first docking structure (141) is a groove; the second docking structure (132) comprises a toggle portion (134) protruding from the body (131); and
a size of the shield cover (13) is larger than that of the opening (111), and an end of the shield cover (13) is pivotally connected to the base (11) by a torsion spring (135); and the shield cover (13) comprises two sliding grooves (133), the base (11) comprises two protruding ribs (112), and the two protruding ribs (112) are respectively detachably located in the two sliding grooves (133).

14. The optical detection device (100) according to claim 1, wherein the shield cover (13) moves in a vertical direction (H) to open or close the opening (111).

15. The optical detection device (100) according to claim 1, wherein the docking sensor (7) is a pressure sensing detector.
